# EUROPEAN PATENT SPECIFICATION

(11) **EP 3 967 873 B1**
(45) Date of publication and mention of the grant of the patent: **08.11.2023**
(21) Application number: 20382808.2
(22) Date of filing: 15.09.2020
(51) Int. Cl.: F03D 13/10, F03D 13/40, E04H 12/34

(54) **ADJUSTING SYSTEM FOR ARRANGING TOWER SECTORS**
VERSTELLSYSTEM ZUR ANORDNUNG VON TURMSEKTOREN
SYSTÈME DE RÉGLAGE D'AGENCEMENT DE SECTEURS DE TOUR

(43) Date of publication of application: 16.03.2022
(73) Proprietor: Siemens Gamesa Renewable Energy Innovation & Technology S.L., 31621 Sarriguren (Navarra) (ES)
(72) Inventor: Señas Perez, Vicente, 31015 Pamplona (ES)
(74) Representative: SGRE-Association

(56) References cited:
- AU-A1- 2018 429 852
- CN-A- 104 832 381
- CN-U- 203 779 017

## Description

The invention describes an adjusting system for arranging tower sectors, a respective mounting system, a construction system and a method of connecting tower sectors.

Tall towers such as wind turbine towers are often constructed as towers with a closed wall (or "skin") by assembling tower sections. To this end, each tower section is equipped with flanges. In order to connect tower sections upon another or to connect them with a top element or to the ground, the tower sections comprise face flanges at their faces. Typically, the tower sections have a cylindrical shape with annular face flanges.

Especially in the technical field of wind turbines, towers that are constructed of tower sections are essential. Due to the increasing need of energy, the construction of bigger towers is of great importance. Generating more energy per turbine results in wind turbines with larger generators, which in turn need larger blades that are able to obtain more energy from the incident wind. These wind turbines then require taller and more stable towers to support blades, nacelle and other components of the wind turbine. Nowadays, for example, towers of wind turbines have diameters of about 6 to 8 meters.

Such tower-dimensions result in difficulties in transporting the tower from the manufacturing site to the construction site of the wind turbine. For example, a tower having a diameter of about 6 m cannot be transported over conventional roads. Thus, the tower is preferably constructed from said tower sections mentioned above.

In general, there are two types of tower sections: sections in the shape of a whole cylinder that are stacked upon another and sections in the shape of an arc-sector of a cylinder (a wall part with the cross section of a circler-arc) that have to be assembled to form a whole cylinder. The sections in the shape of an arc-sector of a cylinder are designated as "tower sectors" in the following to indicate that they are special tower sections not forming a whole cylinder.

A segmentation of a tower into tower sectors has the advantage that the transport is easier. For example, transporting of tower sectors having a breadth of less than 4 meters over conventional roads is possible. Thus, tower sectors can be transported to a construction site by trucks and then assembled to form a tower (or at least a closed tower section) on the construction site.

Often, the tower sectors have straight edge flanges at the edges of their skin surface perpendicular to the face flanges on their faces. In an erected position of the tower, the face flanges would be arranged horizontally and the edge flanges would be arranged vertically. In this case, the tower sectors are connected to each other by connecting these edge flanges with screws, bolts or rivets.

Typically, a number of tower sectors forming a complete cylinder are arranged to form the tower in a lying position (with horizontally arranged edge flanges). The edge flanges are connected with each other and the resulting tower (or tower section in form of a whole cylinder) is then turned upright. Wind turbine towers and supporting structures are known, for example, from CN 104 832 381 A, AU 2018 429 852 A1, and CN 203 779 017 U.

A disadvantage of the state of the art is that this construction is extensive and especially requiring a serious amount of labour time, not only for the connection of the tower sectors, but for a proper arrangement of the tower sectors in a position that they can be correctly connected with another. For connecting the edge-flanges they have to be arranged to each other in a way that their facing surfaces

are exactly on parallel planes, with their flange-holes overlapping.

It is the object of the present invention to improve the known systems, devices and methods to facilitate an improvement in assembling towers from tower sectors.

This object is achieved by an adjusting system according to claim 1, a respective mounting system according to claim 9, a construction system according to claim 13 and a method of connecting tower sectors according to claim 14.

It is made clear that the tower sectors mentioned in the following are wall parts of a tower, especially with a cylindrical and/or conical shape, typically with a closed wall ("skin"). An integer number of tower sectors can be assembled to form a tower or a tower segment forming the whole circumference of the tower. As said above, the tower sectors comprise face flanges at their faces, especially annular face flanges in the form of an arc corresponding to the face of the wall of the tower sector. On the edges perpendicular to the faces, the tower sectors preferably comprise straight edge flanges to be connected with other tower sectors. Although the whole circumference of a tower may be formed with more tower sectors, it is preferred that three tower sectors, each of an arc of 120°, or four tower sectors, each of an arc of 90°, are forming the circumference of the tower. In the following, often an example of three circular tower sectors of 120° forming a cylindrical tower will be used, without necessarily restricting the scope of the invention. The dimensions of the tower sectors are in the size range of meters, wherein the breadth is bigger than one meter, preferably bigger than 2 or even 3 meters, but preferably smaller than 5 meters, especially smaller than 4 meters to be able to be transported on conventional roads.

For assembling the tower sectors, they are in praxis lifted by a crane and positioned in a suitable orientation for assembly. This typically is achieved by tilting (rotating around the longitudinal axis) the tower sectors in or with mounting structures. However, since the tower sectors need different lateral space depending from their orientation during tilting, adjacent tower segments should be distanced during arrangement. For example, when tilting a tower sector beneath an already positioned tower sector, the adjoining edge flanges may bump against another due to the tilting motion when there is not enough space between the tower segments. This may lead to damages of the flanges or of a protective layer of the tower sectors. Thus, after correctly positioning the tower sectors, the distance between them has to be decreased.

An adjusting system according to the invention is applicable (or designed) for arranging tower sectors, i.e. typically adjusting horizontally mounted tower sectors, especially each with a face flange at the facing ends covering the curved faces of the surface shell. The tower sector is actually not part of the adjusting system, but its dimensions are typically known and predefined. The length of the tower segment is not important and may be several meters or several decameters. The adjusting system comprises the following elements:
- A horizontal guiding member.

This guiding member should enable an easy movement of the other components despite the serious weight of the tower sectors. It is preferably a groove, a rail or a plane, especially made of concrete or metal. The guiding member is not necessarily a single corpus, but may be a system of two or more structures, e.g. a rail system or a roller system. The movement is preferably achieved by a rolling or sliding motion, wherein the guiding member should comprise a plane and even contact-surface.
- A first supporting member and a second supporting member arranged in a line.

Since the invention pertains to an adjusting system, there is no direct need to have mounting means for tower sectors, since these mounting means could be put on the supporting members. However, due to better stability, it is preferred that the supporting members are shaped as mounting members, i.e. elements able to mount a tower sector. It should be noted that the mounting structures mentioned in the following description could be special embodiments of the supporting members. However, they also could be arranged on the supporting members and connected with them.
- A shifting mechanism.

Other than a rope or other simple arrangements, this shifting mechanism comprises a stator and an actor, with the stator connected with the first supporting member and the actor connected with the second supporting member. It is clear that for a motion, the stator must not be directly connected to the second supporting member (but by the actor) and the actor must not be connected to the first supporting member (but by the stator). The shifting mechanism is designed to move the supporting members in order to change the relative distance between the supporting members on the guiding member.

Due to the relative motion of the supporting members, one of the supporting members does not necessarily have to be arranged on the guiding member, since the second supporting member can move to a (fixed) first supporting member, as well as the first supporting member can move to a (fixed) second supporting member. Thus, at least one of the supporting members (preferably both) is movably arranged on the guiding member.

Since the dimensions of the breadth of a tower sector are in the order of meters, the dimensions of the adjusting system are also in the order of meters.

A mounting system according to the invention is used for supporting a tower sector for construction. The tower sector preferably comprises face flanges covering the curved faces of the surface shell of the tower sector with a predefined radius R. The mounting system comprises an adjusting system according to the invention and at least two mounting structures. As already said above, the mounting structures can be attached to the adjusting system, by arranging them on the supporting members and connecting them to the supporting members. However, it is also preferred to form the supporting members to be mounting structures.

The mounting structures are positioned in a line laterally reversed (e.g. mirrored) to each other on the guiding member of the adjusting system. In order to move the mounting structures relatively to each other on the guiding member, such that the distance between the mounting structures can be adjusted, the supporting members (that means also the mounting structures) are connected to a shifting mechanism as described above. It is clear that the mounting structures are designed or adjusted such that two tower sectors can be positioned to form a continuous arc of a cylinder.

This mounting system is adapted to hold two tower sectors at one side such that their facing edge flanges can be easily connected to each other by adjusting the distance between the mounting structures with the shifting mechanism. One mounting structure or both mounting structures will move (as supporting members or on supporting members) on the guiding member and, thus, the distance between the mounting structures can be reduced until the edge flanges meet. It should be noted that such mounting system should be installed at both ends of the tower sectors to hold them properly.

A construction system according to the invention comprises (at least) two mounting systems according to the invention and (at least) two tower sectors according comprising face flanges on each face, with a mounting system arranged on each face flange of the tower sectors. Thus, the tower segments are arranged essentially parallel to each other with their edge radii (or the planes of their facing edge flanges) preferably being essentially vertical.

A method according to the invention of connecting tower sectors, the method comprising:
- Providing at least two adjusting systems according to the invention.

The adjusting systems are preferably transported to or assembled on the construction site and arranged such that tower sectors fit between the adjusting systems.
- Providing at least four mounting structures, wherein at least two mounting structures are arranged in a line and connected with or formed by one of the adjusting systems. As said above, the mounting structures are arranged on the supporting members of the adjusting systems or formed by these supporting members. It is clear, that the adjusting systems are arranged such that tower sectors connected to the mounting structures fit between the adjusting systems.
- Providing at least two tower sectors with predefined face flanges covering the curved faces of the surface shell of the tower sector, and connecting each face flange with one of the mounting structures so that the tower sectors are arranged parallel besides each other.
- Orientating the tower sectors such that adjacent edges are arranged to be connected with each other.

Typically, the tower sectors are tilted such that they are able to form an arc of a cylinder when they meet each other. Generally, this is achieved by orienting the tower sectors such that the edge radii of the edges to be connected are oriented vertically, e.g. orienting the connection-plane of edge flanges vertically.
- Adjusting the distance between the tower sectors until the sides of the tower sectors facing each other (their edge flanges at these edges) meet.

Now the mounting structures are shifted towards each other with the shifting mechanism of the adjusting system until the edges tower sectors (especially their facing edge flanges) touch each other.
- Connecting the tower sectors, preferably by connecting the corresponding edge flanges.

Now it is very easy to connect the tower sectors either by welding, or particularly preferably by connecting their edge flanges by screwing, bolting or riveting.

The method is preferably performed by using a mounting system and/or a construction system according to the invention.

A wind turbine tower according to the invention is built by using an adjusting system according to the invention and/or by a method according to the invention.

Particularly advantageous embodiments and features of the invention are given by the dependent claims, as revealed in the following description. Features of different claim categories may be combined as appropriate to give further embodiments not described herein.

According to the invention, the supporting member is designed to mount a mounting structure or shaped as a mounting structure. This has already been described above. The advantage of the preferred shape of the supporting members as mounting structure has the advantage that the setup is very stable. The advantage of the possibility to arrange mounting structures on the supporting members has the advantage that tower segments already connected to mounting structures (e.g. acting as transport security units) can be connected to the adjusting system. The mounting structures are, adapted to be releasable connected to face flanges of a tower sector and to support the connected tower sector.

Preferably, the adjusting system comprises at least two mounting structures, one arranged on or formed by the first supporting member and one arranged on or formed by the second supporting member laterally reversed (e.g. mirrored), such that face flanges of two tower sectors can be arranged on the mounting structures so that they face each other.

According to a preferred adjusting system, the supporting members comprise a shell support member adapted and arranged to support the outer shell of a tower sector. Such shell support member is a unit that is designed to support the shell of a tower sector, i.e. the outer surface of the shell lies on a contact-surface of the shell support member. This contact surface should be rendered such (e.g. elastic) that the surface of the tower sector is not scratched or dented, and especially has a negative form of the surface of the tower sector. It is preferred that the shell support member is articulated and/or adaptable for adjusting the shell support member to match the curvature of an outer shell of a tower sector. Thus, e.g. tower segments of different diameters could be safely arranged with the adjusting system.

According to a preferred adjusting system, the guiding member is a slider support, especially a groove or a rail and the supporting members comprise means to roll or glide on the guiding member. As said above, a preferred material for the guiding member is metal and/or concrete.

According to a preferred adjusting system, the guiding member and/or the supporting members comprise(s) a boundary structure biasing the supporting members to move on only one lateral axis of the guiding member. This could be achieved e.g. by a groove that has side walls to lead a supporting member. In the case when the guiding member is a rail, the supporting means could comprise structures encompassing the rail at the sides for a secure movement.

According to a preferred adjusting system, the shifting mechanism comprises a threaded or geared shifting system.

It is preferred that the stator comprises an internal thread and the actor comprises an external tread designed to fit into the internal thread of the stator. According to another preferred variant, the stator comprises an external thread and the actor comprises an internal tread designed to fit around the external thread of the stator. Alternatively, one hydraulic cylinder part of a hydraulic cylinder acting as stator is connected to the first supporting member and the other hydraulic cylinder part of the hydraulic cylinder acting as actor is connected to the second supporting member.

It should be noted that the stator is connected to means for biasing the shifting mechanism, i.e. means "providing" the energy for the motion of the shifting means. According to a preferred adjusting system, the shifting mechanism is adapted to be applied by hand, preferably comprising a crank-handle or a hand wheel, or by a motor, the motor preferably comprising a gear. These means are preferred for causing the motion of threaded shifting means. Other means are compressors of a pneumatic or a hydraulic system for driving a pneumatic or hydraulic cylinder.

According to the invention, the shifting mechanism is connected to the second supporting member with a rod, a bar, a chain or a cable, preferably wherein the actor of the shifting mechanism is connected to the rod, the bar, the chain or the cable, and/or the shifting mechanism comprises a hydraulic cylinder adapted for a lateral forced motion.

According to a preferred mounting system (i.e. especially an adjusting system with supporting members formed as mounting structures), a mounting structure comprises a shell support member adapted and arranged to support the outer shell of a tower sector (see above). The shell support member is preferably articulated and/or adaptable for adjusting to match the curvature of an outer shell of a tower sector.

According to a preferred mounting system, the mounting structure comprises bearings designed to mount trunnions arranged on face flanges of tower sectors. A preferred mounting structure comprises a support frame, especially L-shaped, with a base area on its bottom side designed to be mounted on the guiding member or on a supporting member. The support frame comprises a first bearing and a second bearing, wherein each bearing is adapted for supporting a trunnion (of a tower sector), wherein the relative arrangement of the bearings on the support frame is such that the first bearing is positioned higher than the second bearing, and that the bearings lie on the arc of a circular sector with the radius R, a central angle <100°, a vertically oriented edge-radius outside the second bearing and a center of mass between the bearings. The bearings of the mounting structure are, thus, positioned such that a predefined tower sector with trunnions at predefined positions on the face flange can be held such that when the trunnions are mounted by the bearings, the edge of the wall part that is to be assembled with another tower sector is such that the edge radius (or the plane of an edge flange) of this edge is essentially vertical.

According to a preferred mounting system, the mounting structure is designed to rotate and/or tilt and/or lift a tower sector mounted on the mounting structure. A preferred mounting structure comprises an elongate supporting member designed to be mounted on a support member or on the guiding member and an elongate mounting member with two fixing means designed to be releasable fastened as a cord to a circular face flange of a tower element. The fixing means can e.g. be holes or bolts. The supporting member and the mounting member are arranged parallel according to their longitudinal axes and pivotable connected with each other at their longitudinal ends to form legs of an angle, so that the plane of rotation between the supporting member and the mounting member is perpendicular to the base area. The pivoting can preferably be achieved with a rising mechanism, e.g. a hydraulic cylinder.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 depicts a wind turbine built with a tower in accordance with the present invention,
Figure 2 shows an example for an adjusting system according to the invention,
Figure 3 shows the example for an adjusting system of figure 2 from another angle of view,
Figure 4 shows an example for an adjusting system according to the invention with a hydraulic shifting mechanism,
Figure 5 shows a schematic block diagram of the process flow of a preferred method according to the invention,
Figure 6 shows an example of a construction system according to the invention with mounting systems according to the invention,
Figure 7 shows another example of a mounting system according to the invention.

In the diagrams, like numbers refer to like objects throughout. Objects in the diagrams are not necessarily drawn to scale.

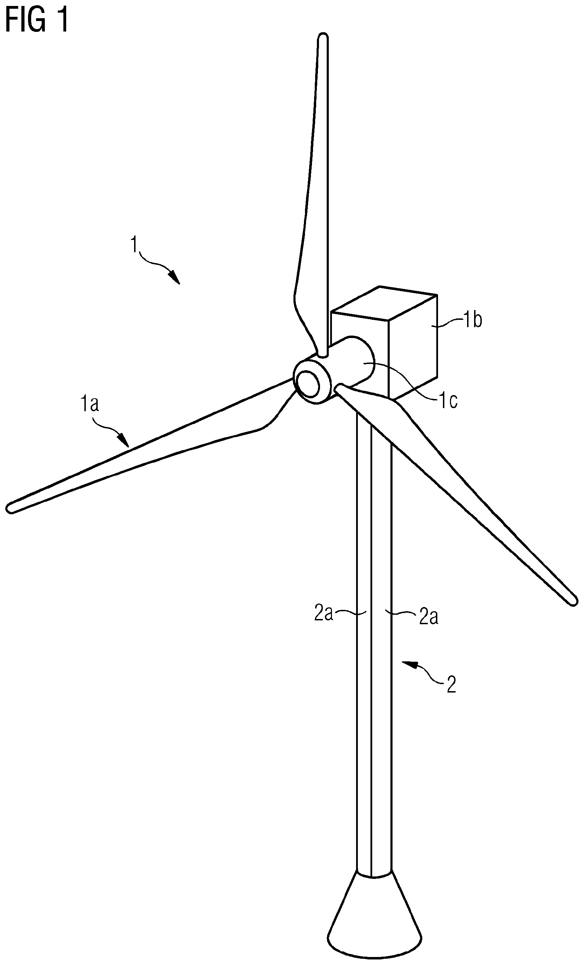

Figure 1 depicts a wind turbine 1 including one or more rotor blades 1a on a rotor 1a that connect to a hub 1c of the wind turbine 1. The hub 1c is connected to a nacelle 1b that is atop a wind turbine tower 2 built from essentially identical tower sectors 2a that have been assembled by using embodiments of the present invention.

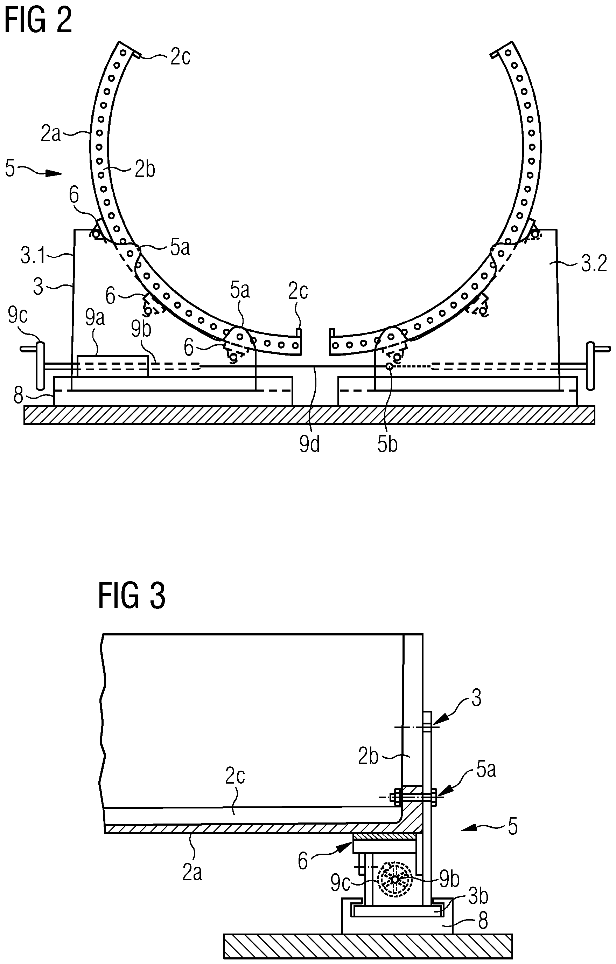

Figure 2 shows an example for an adjusting system 5 according to the invention, designed to arrange tower segments 2a, especially to adjust horizontally mounted tower sectors 2a, each with a face flange 2b at the facing ends covering the curved faces of the surface shell. The adjusting system 5 comprises a horizontal guiding member 8, supporting members 3 and a shifting mechanism 9.

The supporting members 3, i.e. a first supporting member 3.1 and a second supporting member 3.2, are arranged on the guiding member 8, wherein in this example, the supporting members 3 are shaped as mounting structures 3 (however, they could also be connected with mounting structures 3). In this figure, the supporting members 3 in the shape of mounting structures 3 are connected to face flanges 2b of tower segments 2a with tower segment mountings 3a. The connection could be realized e.g. with bolts. For a better load distribution, the supporting members 3 also comprise shell support members 6 that are adapted and arranged to support the outer shell of a tower sector 2a. The shell support members 6 are preferably adaptable for adjusting to match the curvature of the outer shell of the tower sector 2a.

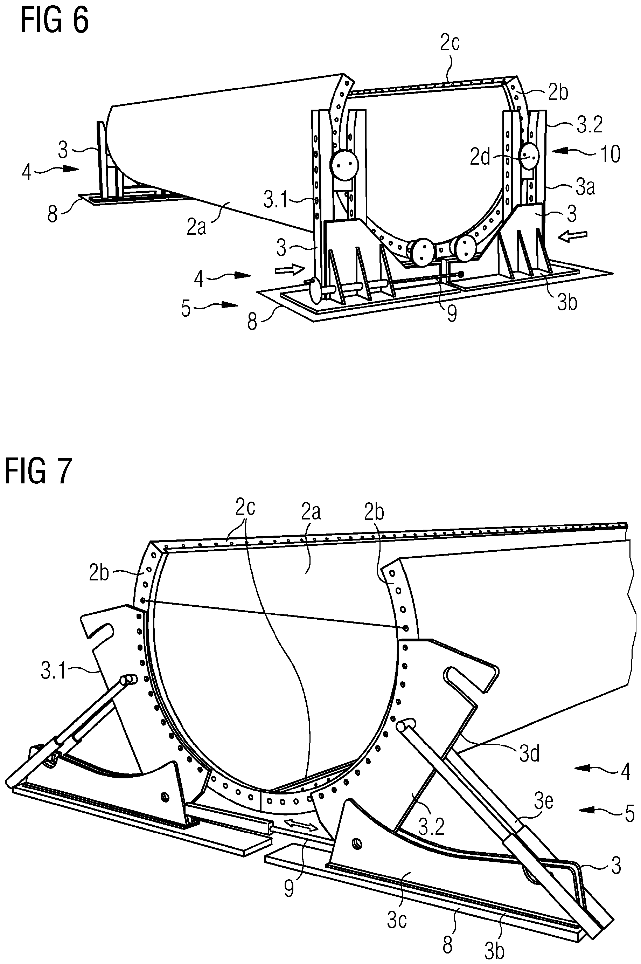

The horizontal guiding member 8 is in this example shaped as a groove encompassing the base area 3b of the supporting member 3 (see figure 3). The guiding member 8 could also be a rail or simply a plane, wherein it is preferred that the guiding member 8 comprises a boundary structure (see figure 3) biasing the supporting members 3 to move on only one lateral axis. The movement here is a sliding movement, wherein also a rolling movement is possible. The guiding member 8 is not necessarily a single structure as shown here, since the supporting members 3 do possibly not need to use the whole range of the guiding member 8. It may also be a system of two or more structures, as e.g. shown in figure 7.

The shifting mechanism 9 has a stator 9a, here means with an internal thread, that is connected with the first supporting member 3.1. A cylindrical bar with an external tread designed to fit into the internal thread of the stator 9a is the actor 9b. The actor 9b is screwed into the stator 9a and can be rotated with a hand wheel 9c. When rotated, the actor 9b moves back and forward (here left or right), depending on the direction of the turning motion, and moves a rod 9d. This rod 9d is mounted in an adjuster mounting 5b in the second supporting member 3.2 and pushes it away from the first supporting member 3.1 or pulls it towards the first supporting member 3.1 (depending on the motion of the actor 9b), while the supporting members 3 glide on the guiding member 8. Thus, the shifting mechanism 9 is designed to move the supporting members 3 in order to change the relative distance between the supporting members 3 on the guiding member 8.

The adjusting means could also have a further shifting mechanism (dashed lines) with a stator connected to the second supporting member 3.2 and the actor connected to the first supporting member 3.1. Then a user can adjust the distance of the supporting members 3 from both sides.

Although only the shifting mechanism 9 does the adjusting motion, the support structures 3 and guiding members 8 are also necessary for a correct and easy movement, since the tower segments have a serious weight. Thus, shifting mechanism 9, support structures 3 (especially in form of mounting structures 3) and guiding member 8 form the core of the adjusting system 5 according to the invention.

Figure 3 shows the example for an adjusting system 5 of figure 2 from another angle of view. Here the encompassing of the base area 3b of the supporting member 3 by the guiding members 8 can be seen better, as well as the mounting of the tower sector 2a especially on the shell support members 6.

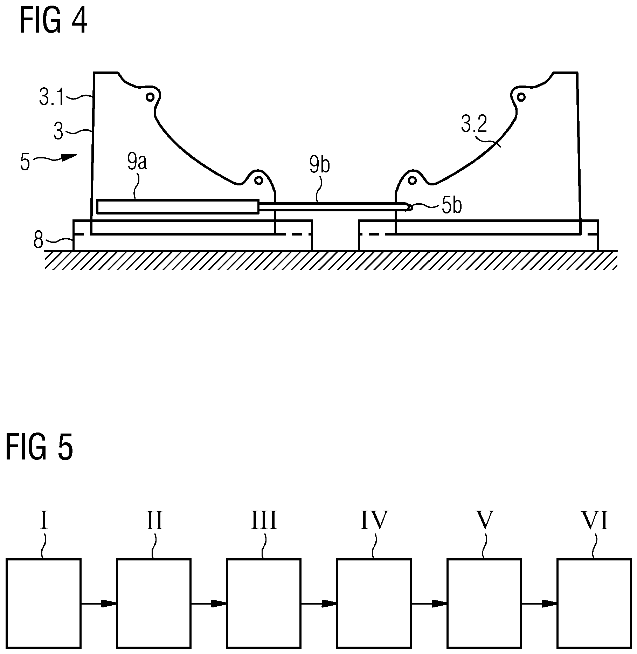

Figure 4 shows an example for an adjusting system according to the invention. It is similar to the embodiment of figure 2, while that there is not shown any tower sector. The main difference to figure 2 is, that it comprises a hydraulic shifting mechanism instead of a threaded one. A hydraulic cylinder part of a hydraulic cylinder is connected to the first supporting member 3.1 and acts as stator 9a. The other hydraulic cylinder part of the hydraulic cylinder is the actor 9b and connected to the second supporting member 3.2. Here, no additional rod 5d is shown and the actor 9b is directly connected to the adjuster mounting 5b.

Figure 5 shows a block diagram of the process flow of a preferred method for connecting tower sectors 2a with predefined face flanges 2b covering the curved faces of the surface shell of the tower sectors 2a according to the invention.

In step I, at least two adjusting systems 5 according to the invention (shown e.g. in figures 2 to 4) are provided. They can be transported to or assembled on the construction site and be used for the assembly of several towers (or tower segments) .

In step II, at least four mounting structures 3 are provided, wherein at least two mounting structures are pairwise arranged in a line and connected with or formed by one of the adjusting systems. Such mounting structures can be seen in figures 2 to 4, 6 or 7.

In step III, at least two tower sectors 2a (preferably three or four tower sectors 2a forming a cylinder) are provided, by transporting them to the construction site. They can e.g. be transported by trucks and lifted by a crane. The tower sectors 2a are connected with each face flange 2b with one of the mounting systems 4 so that the tower sectors 2a are arranged parallel besides each other. The result is e.g. shown in figures 6 and 7.

In step IV, the tower sectors 2a are oriented such that adjacent edges are arranged to be connected with each other. Typically, the tower sectors 2a are tilted such that the connection-plane of edge flanges 2c is oriented vertically.

The tower sectors 2a are in praxis lifted by a crane and positioned in a suitable orientation for assembly. This typically is achieved by tilting the tower sectors 2a in or with the mounting structures 3. Since the tower sectors 2a need different lateral space depending from their orientation, adjacent tower sectors 2a have to be spaced apart. When rotating a tower sector 2a beneath an already positioned tower sector 2a, the adjoining edge flanges 2c may interfere with each other when there is not enough space between these elements. Thus, the distance between the tower sections 2a should first be wide for positioning and must then be reduced for assembly. Thus, the tower sectors 2a have to be shifted to each other in order to connect them.

In step V this is done: the distance between the tower sectors 2a is adjusted until the sides of the tower sectors 2a (here the edge flanges 2c) facing each other meet, as shown in figures 6 or 7.

In step VI, the tower sectors are connected by welding, bolting, screwing or riveting.

The edge flanges 2c meeting do not necessarily have to be the lower edge flanges 2c. There is also a setup possible, where the upper edge flanges 2c meet for assembly. For example, regarding tower sectors 2a with an opening angle of 90°, first two tower sectors 2a with their inner sides facing up may be assembled like shown in figures 6 or 7, then two tower sectors 2a with their inner sides facing down may be assembled by using the adjusting system according to the present invention to form a "roof", and last the roof can be lifted and set on the bottom construction to be assembled to form a whole circular tower 2.

Figure 6 shows the forming of a tower-part using an example of a construction system 10 according to the invention with mounting systems 4 according to the invention. Two tower sectors 2a have been introduced into mounting structures 3. The mounting structure 3 comprises an L-shaped support frame 3a with a horizontal base part with a second bearing and a girder part that is especially arranged essentially perpendicular to a base area 3b. The girder part has a forked end area so that a trunnion 7 can be introduced into a first bearing 2a in the girder part from the upper end. The base area 3b is realized here as a base plate 3b that is broader than the support frame 3a and arranged such that it has an overhang over the sides of the support frame 3a and also the end with the first bearing. This has the advantage that the danger of tilting of the mounting structure 3 is reduced or prevented. The base plate 3b furthermore has a flush fit with the support frame at the end with the second bearing. This has the advantage that the two mounting structures 3 shown can be moved very near to each other to bring edge flanges of tower sectors 2a into contact with another. Shown is a 120°-tower sector (the opening angle of the arc is 120°). However, other tower sectors 2a, e.g. 90°-tower sectors, can be mounted in the mounting structure 3, also.

The construction system 10 according to the invention comprises two mounting systems 4 according to the invention (one mounting system 4 is partly covered by the tower segments 2a). Each mounting system 4 comprises two supporting systems 3 designed as mounting structures 3 as seen e.g. in figure 5, wherein the mounting structures 3 are positioned laterally reversed to each other so that the tilted tower sectors 2a are mirrored to each other. In this example, the second bearings are facing each other. As can be seen, the lower edge flanges 2c are each positioned vertically and fit perfect to be connected with another.

The mounting structures 3 are positioned on a guiding member 8, here a rail, wherein the mounting structures 3 are connected by a shifting mechanism 9, e.g. like shown in figures 2 and 3, designed to move the mounting structures 3 relatively to each other on the guiding member 8. With this shifting mechanism 9, the distance between the mounting structures 3 can be adjusted (see arrows at the side) and the edge flanges 2c can be brought into contact with another. In this, a mounting system 4 corresponds to an adjusting system 5 comprising mounting structures 3.

Figure 7 shows another example of a mounting system 4 according to the invention holding two tilted tower sectors 2a held by preferred mounting structures 3 that are here supporting members 3 formed as mounting structures 3. As can be seen, the lower edge flange 2c is held vertically to be connected with another edge flange 2c. Here a mounting member 3d is pivoted in a supporting member 3c that stands firmly with its base area 3b on the guiding member 8. The supporting member 3c comprises at its "free" end (free: not connected with the mounting member 3d) a raising mechanism 3e. The raising mechanism 3e can be attached to the mounting member 3d with its actor, while its stator can then be attached to the supporting member 3c.

The mounting system 4 comprises the adjusting system 5 according to the invention, wherein this adjusting system 5 again comprising mounting structures 3. The mounting structures 3 are positioned on a guiding member 8, here a rail, wherein the mounting structures 3 are connected with each other by a shifting mechanism 9, here a hydraulic cylinder, designed to move the mounting structures 3 relatively to each other on the guiding member 8. With this shifting mechanism 9, the distance between the mounting structures 3 can be adjusted (see double arrow) and the edge flanges 2c can be brought into contact with another.

Although the present invention has been disclosed in the form of preferred embodiments and variations thereon, it will be understood that numerous additional modifications and variations could be made thereto without departing from the scope of the invention which is defined by the appended claims. For the sake of clarity, it is to be understood that the use of "a" or "an" throughout this application does not exclude a plurality, and "comprising" does not exclude other steps or elements. The mention of a "member", "means" or a "system" or similar does not preclude the use of more than one respective component.

## Claims

1. An adjusting system (5) for arranging tower sectors (2a), the adjusting system (5) comprising:
- a horizontal guiding member (8),
- a first supporting member (3.1) and a second supporting member (3.2), being arranged in a line and at least one of the supporting members (3) being movably arranged on the guiding member (8), wherein the supporting members (3) are designed to mount a mounting structure (3) or shaped as a mounting structure (3), adapted to be releasable connected to face flanges (2b) of a tower sector (2a) and to support the connected tower sector (2a),
- a shifting mechanism (9) comprising a stator (9a) and an actor (9b), with the stator (9a) connected with the first supporting member (3.1) and the actor (9b) connected with the second supporting member (3.2), the shifting mechanism (9) designed to move the supporting members (3) in order to change the relative distance between the supporting members (3) on the guiding member (8),
wherein the actor (9b) of the shifting mechanism (9) is connected to the second supporting member (3.2) with a rod, a bar, a chain or a cable and/or wherein the shifting mechanism (9) comprises a hydraulic cylinder adapted for a lateral forced motion.

2. The adjusting system according to claim 1, wherein the adjusting system (5) comprises at least two mounting structures (3), one arranged on or formed by the first supporting member (3.1) and one arranged on or formed by the second supporting member (3.2) laterally reversed, such that face flanges (2b) of two tower sectors (2a) can be arranged on the mounting structures (3) so that they face each other.

3. The adjusting system according to any of the preceding claims, wherein a supporting member (3) comprises a shell support member (6) adapted and arranged to support the outer shell of a tower sector (2a),
preferably wherein the shell support member (6) is articulated and/or adaptable for adjusting the shell support member (6) to match the curvature of an outer shell of a tower sector (2a).

4. The adjusting system according to any of the preceding claims, wherein the guiding member (8) is a slider support, especially a groove or a rail and the supporting members (3) comprise means to roll or glide on the guiding member (8).

5. The adjusting system according to any of the preceding claims, wherein the guiding member (8) and/or the supporting members (3) comprise(s) a boundary structure biasing the supporting members (3) to move on only one lateral axis of the guiding member (8).

6. The adjusting system according to any of the preceding claims, wherein the shifting mechanism (9) comprises a threaded or geared shifting system,
preferably wherein the stator (9a) comprises an internal thread and the actor (9b) comprises an external tread designed to fit into the internal thread of the stator (9a).

7. The adjusting system according to any of the preceding claims, wherein the shifting mechanism (9) is adapted to be applied by hand, preferably comprising a crank-handle or a hand wheel, or by a motor, preferably comprising a gear.

8. The adjusting system according to any of the preceding claims, wherein the shifting mechanism (9) comprises a hydraulic cylinder adapted for a lateral forced motion, wherein one hydraulic cylinder part of a hydraulic cylinder acting as stator (9a) is connected to the first supporting member (3.1) and the other hydraulic cylinder part of the hydraulic cylinder acting as actor (9b) is connected to the second supporting member (3.2).

9. A mounting system (4) for supporting a tower sector (2a) for construction comprising an adjusting system (5) according to any of the preceding claims and at least two mounting structures (3) attached to or provided by the adjusting system (5), the mounting structures (3) positioned laterally reversed in a line and connected to the shifting mechanism (9) in order to move the mounting structures (3) relatively to each other such that the distance between the mounting structures (3) can be laterally adjusted.

10. The mounting system according to claim 9, wherein a mounting structure (3) comprises a shell support member (6) adapted and arranged to support the outer shell of a tower sector (2a),
preferably wherein the shell support member (6) is articulated and/or adaptable for adjusting to match the curvature of an outer shell of a tower sector (2a).

11. The mounting system according to claim 9 or 10, wherein a mounting structure (3) comprises bearings designed to mount trunnions (7) arranged on a face flange (2b) of a tower sector (2a).

12. The mounting system according to any of claims 9 to 11, wherein the mounting structure (3) is designed to rotate and/or tilt and/or lift a tower sector (2a) mounted on the mounting structure (3).

13. A construction system (10) comprising at least two mounting systems (4) according to one of claims 9 to 12, and at least two tower sectors (2a) comprising face flanges (2b) on each face, with a mounting system (4) arranged on each face flange (2b) of the tower sectors (2a).

14. A method of connecting tower sectors (2a), the method comprising:
- providing at least two adjusting systems (5) according to any of claims 1 to 8,
- providing at least four mounting structures (3), wherein at least two mounting structures (3) are arranged in a line and connected with or formed by one of the adjusting systems (5),
- providing at least two tower sectors (2a) with predefined face flanges (2b) covering the curved faces of the surface shell of the tower sector (2a), and connecting each face flange (2b) with one of the mounting structures (3) so that the tower sectors (2a) are arranged parallel besides each other,
- orientating the tower sectors (2a) such that adjacent edges are arranged to be connected with each other,
- adjusting the distance between the tower sectors (2a) with the adjusting systems (5) until the sides of the tower sectors (2a) facing each other meet,
- connecting the tower sectors (2a).

## Patentansprüche

1. Verstellsystem (5) zum Anordnen von Turmsektoren (2a), wobei das Verstellsystem (5) Folgendes umfasst:
- ein horizontales Führungsglied (8),
- ein erstes Stützglied (3.1) und ein zweites Stützglied (3.2), die in einer Linie angeordnet sind, wobei mindestens eines der Stützglieder (3) beweglich an dem Führungsglied (8) angeordnet ist, wobei die Stützglieder (3) dazu ausgelegt sind, dass eine Montagestruktur (3) daran montiert ist, oder als eine Montagestruktur (3) gestaltet sind und dazu ausgeführt sind, freigebbar mit Flächenflanschen (2b) eines Turmsektors (2a) verbunden zu werden und den verbundenen Turmsektor (2a) zu stützen,
- einen Schiebemechanismus (9), der einen Stator (9a) und einen Aktor (9b) umfasst, wobei der Stator (9a) mit dem ersten Stützglied (3.1) verbunden ist und der Aktor (9b) mit dem zweiten Stützglied (3.2) verbunden ist, wobei der Schiebemechanismus (9) dazu ausgelegt ist, die Stützglieder (3) zu bewegen, um den relativen Abstand zwischen den Stützgliedern (3) an dem Führungsglied (8) zu ändern,
wobei der Aktor (9b) des Schiebemechanismus (9) mit einer Stange, einem Stab, einer Kette oder einem Kabel mit dem zweiten Stützglied (3.2) verbunden ist und/oder wobei der Schiebemechanismus (9) einen Hydraulikzylinder umfasst, der für eine seitliche Zwangsbewegung ausgeführt ist.

2. Verstellsystem nach Anspruch 1, wobei das Verstellsystem (5) mindestens zwei Montagestrukturen (3) umfasst, wobei eine an dem ersten Stützglied (3.1) angeordnet ist oder durch dieses gebildet wird und eine seitenverkehrt an dem zweiten Stützglied (3.2) angeordnet ist oder durch dieses gebildet wird, so dass die Flächenflansche (2b) von zwei Turmsektoren (2a) an den Montagestrukturen (3) angeordnet werden können, so dass sie einander zugewandt sind.

3. Verstellsystem nach einem der vorhergehenden Ansprüche, wobei ein Stützglied (3) ein Schalenstützglied (6) umfasst, das zum Stützen der Außenschale eines Turmsektors (2a) ausgeführt und angeordnet ist, vorzugsweise wobei das Schalenstützglied (6) zum Verstellen des Schalenstützglieds (6) angelenkt und/oder ausführbar ist, um sich an die Krümmung einer Außenschale eines Turmsektors (2a) anzupassen.

4. Verstellsystem nach einem der vorhergehenden Ansprüche, wobei das Führungsglied (8) eine Gleitstütze, insbesondere eine Nut oder eine Schiene, ist und die Stützglieder (3) Mittel zum Rollen oder Gleiten auf dem Führungsglied (8) umfassen.

5. Verstellsystem nach einem der vorhergehenden Ansprüche, wobei das Führungsglied (8) und/oder die Stützglieder (3) eine Grenzstruktur umfasst/umfassen, die die Stützglieder (3) vorspannt, so dass sie sich nur entlang einer seitlichen Achse des Führungsglieds (8) bewegen.

6. Verstellsystem nach einem der vorhergehenden Ansprüche, wobei der Schiebemechanismus (9) ein Gewinde- oder verzahntes Schiebesystem umfasst, vorzugsweise wobei der Stator (9a) ein Innengewinde umfasst und der Aktor (9b) ein Außengewinde umfasst, das dazu ausgelegt ist, in das Innengewinde des Stators (9a) zu passen.

7. Verstellsystem nach einem der vorhergehenden Ansprüche, wobei der Schiebemechanismus (9) dazu ausgeführt ist, manuell angewandt zu werden, und vorzugsweise einen Kurbelgriff oder ein Handrad umfasst, oder mittels eines Motors, der vorzugsweise ein Getriebe umfasst.

8. Verstellsystem nach einem der vorhergehenden Ansprüche, wobei der Schiebemechanismus (9) einen für eine seitliche Zwangsbewegung ausgeführten Hydraulikzylinder umfasst, wobei ein als Stator (9a) wirkender Hydraulikzylinderteil eines Hydraulikzylinders mit dem ersten Stützglied (3.1) verbunden ist und der andere als Aktor (9b) wirkende Hydraulikzylinderteil eines Hydraulikzylinders mit dem zweiten Stützglied (3.2) verbunden ist.

9. Montagesystem (4) zum Stützen eines Turmsektors (2a) für die Konstruktion, umfassend ein Verstellsystem (5) nach einem der vorhergehenden Ansprüche und mindestens zwei Montagestrukturen (3), die an dem Verstellsystem (5) angebracht sind oder von diesem bereitgestellt werden, wobei die Montagestrukturen (3) seitenverkehrt in einer Linie positioniert und mit dem Schiebemechanismus (9) verbunden sind, um die Montagestrukturen (3) bezüglich einander zu bewegen, so dass der Abstand zwischen den Montagestrukturen (3) seitlich verstellt werden kann.

10. Montagesystem nach Anspruch 9, wobei eine Montagestruktur (3) ein Schalenstützglied (6) umfasst, das zum Stützen der Außenschale eines Turmsektors (2a) ausgeführt und angeordnet ist,
vorzugsweise wobei das Schalenstützglied (6) zum Verstellen angelenkt und/oder ausführbar ist, um sich an die Krümmung einer Außenschale eines Turmsektors (2a) anzupassen.

11. Montagesystem nach Anspruch 9 oder 10, wobei eine Montagestruktur (3) Lager umfasst, die zum Montieren von Zapfen (7) ausgelegt sind, die an einem Flächenflansch (2b) eines Turmsektors (2a) angeordnet sind.

12. Montagesystem nach einem der Ansprüche 9 bis 11, wobei die Montagestruktur (3) dazu ausgelegt ist, einen an der Montagestruktur (3) montierten Turmsektor (2a) zu drehen und/oder zu kippen und/oder anzuheben.

13. Konstruktionssystem (10), umfassend mindestens zwei Montagesysteme (4) nach einem der Ansprüche 9 bis 12 und mindestens zwei Turmsektoren (2a), die Flächenflansche (2b) an jeder Fläche umfassen, wobei ein Montagesystem (4) an jedem Flächenflansch (2b) der Turmsektoren (2a) angeordnet ist.

14. Verfahren zum Verbinden von Turmsektoren (2a), wobei das Verfahren Folgendes umfasst:
- Bereitstellen von mindestens zwei Verstellsystemen (5) nach einem der Ansprüche 1 bis 8,
- Bereitstellen von mindestens vier Montagestrukturen (3), wobei mindestens zwei Montagestrukturen (3) in einer Linie angeordnet und mit einem der Verstellsysteme (5) verbunden oder von einem davon gebildet sind,
- Bereitstellen von mindestens zwei Turmsektoren (2a) mit vordefinierten Flächenflanschen (2b), die die gekrümmten Flächen der Oberflächenschale des Turmsektors (2a) abdecken, und Verbinden jedes Flächenflanschs (2b) mit einer der Montagestrukturen (3), so dass die Turmsektoren (2a) parallel nebeneinander angeordnet sind,
- Ausrichten der Turmsektoren (2a), so dass benachbarte Ränder so angeordnet sind, dass sie miteinander verbunden werden können,
- Verstellen des Abstands zwischen den Turmsektoren (2a) mit den Verstellsystemen (5) bis die einander zugewandten Seiten der Turmsektoren (2a) aufeinandertreffen,
- Verbinden der Turmsektoren (2a).

## Revendications

1. Système de réglage (5) pour agencer des secteurs de tour (2a), le système de réglage (5) comprenant :
- un élément de guidage horizontal (8) ;
- un premier élément de support (3.1) et un second élément de support (3.2) qui sont agencés selon une ligne, et au moins l'un des éléments de support (3) étant agencé de façon mobile sur l'élément de guidage (8), dans lequel les éléments de support (3) sont conçus pour être montés sur une structure de montage (3) ou sont constitués en tant que structure de montage (3), et sont adaptés pour être connectés de façon libérable à des brides (2b) d'un secteur de tour (2a) et pour supporter le secteur de tour (2a) connecté ; et
- un mécanisme de décalage (9) qui comprend un stator (9a) et un élément d'actionnement (9b), le stator (9a) étant connecté avec le premier élément de support (3.1) et l'élément d'actionnement (9b) étant connecté avec le second élément de support (3.2), le mécanisme de décalage (9) étant conçu pour déplacer les éléments de support (3) afin de faire varier la distance relative entre les éléments de support (3) sur l'élément de guidage (8) ;
dans lequel l'élément d'actionnement (9b) du mécanisme de décalage (9) est connecté au second élément de support (3.2) à l'aide d'une tige, d'une barre, d'une chaîne ou d'un câble et/ou dans lequel le mécanisme de décalage (9) comprend un vérin hydraulique qui est adapté pour un déplacement latéral forcé.

2. Système de réglage selon la revendication 1, dans lequel le système de réglage (5) comprend au moins deux structures de montage (3), l'une étant agencée sur ou formée par le premier élément de support (3.1) et l'une étant agencée sur ou formée par le second élément de support (3.2) de façon inversée latéralement de telle sorte que des brides (2b) de deux secteurs de tour (2a) puissent être agencées sur les structures de montage (3) de manière à ce qu'elles se fassent face l'une l'autre.

3. Système de réglage selon l'une quelconque des revendications précédentes, dans lequel un élément de support (3) comprend un élément de support de coque (6) qui est adapté et agencé pour supporter la coque externe d'un secteur de tour (2a), de préférence dans lequel l'élément de support de coque (6) est articulé et/ou peut être adapté pour régler l'élément de support de coque (6) de manière à ce qu'il épouse la courbure d'une coque externe d'un secteur de tour (2a).

4. Système de réglage selon l'une quelconque des revendications précédentes, dans lequel l'élément de guidage (8) est un support d'élément de coulissement, tout particulièrement une rainure ou un rail, et les éléments de support (3) comprennent des moyens pour rouler ou glisser sur l'élément de guidage (8).

5. Système de réglage selon l'une quelconque des revendications précédentes, dans lequel l'élément de guidage (8) et/ou les éléments de support (3) comprennent/comprend une structure de limitation qui exerce une sollicitation par poussée sur les éléments de support (3) pour qu'ils soient déplacés sur seulement un axe latéral de l'élément de guidage (8).

6. Système de réglage selon l'une quelconque des revendications précédentes, dans lequel le mécanisme de décalage (9) comprend un système de décalage à filets ou à engrenages, de préférence dans lequel le stator (9a) comprend un filet interne et l'élément d'actionnement (9b) comprend un filet externe qui est conçu pour être ajusté à l'intérieur du filet interne du stator (9a).

7. Système de réglage selon l'une quelconque des revendications précédentes, dans lequel le mécanisme de décalage (9) est adapté pour être manœuvré à la main, de préférence il comprend une manivelle ou un volant, ou pour être actionné par un moteur, de préférence il comprend un engrenage.

8. Système de réglage selon l'une quelconque des revendications précédentes, dans lequel le mécanisme de décalage (9) comprend un vérin hydraulique qui est adapté pour un déplacement latéral forcé, dans lequel une partie de vérin hydraulique d'un vérin hydraulique qui joue le rôle de stator (9a) est connectée au premier élément de support (3.1) et l'autre partie de vérin hydraulique du vérin hydraulique qui joue le rôle d'élément d'actionnement (9b) est connectée au second élément de support (3.2).

9. Système de montage (4) pour supporter un secteur de tour (2a) pour la construction, comprenant un système de réglage (5) selon l'une quelconque des revendications précédentes et au moins deux structures de montage (3) qui sont liées au système de réglage (5) ou qui sont constituées par ce même système de réglage, les structures de montage (3) étant positionnées de façon inversée latéralement selon une ligne et étant connectées au mécanisme de décalage (9) afin de déplacer les structures de montage (3) de façon relative l'une par rapport à l'autre ou les unes par rapport aux autres de telle sorte que la distance entre les structures de montage (3) puisse être réglée latéralement.

10. Système de montage selon la revendication 9, dans lequel une structure de montage (3) comprend un élément de support de coque (6) qui est adapté et agencé pour supporter la coque externe d'un secteur de tour (2a) ;
de préférence dans lequel l'élément de support de coque (6) est articulé et/ou peut être adapté pour son réglage de manière à ce qu'il épouse la courbure d'une coque externe d'un secteur de tour (2a).

11. Système de montage selon la revendication 9 ou 10, dans lequel une structure de montage (3) comprend des paliers conçus pour recevoir en montage des tourillons (7) qui sont agencés sur une bride (2b) d'un secteur de tour (2a).

12. Système de montage selon l'une quelconque des revendications 9 à 11, dans lequel la structure de montage (3) est conçue pour entraîner en rotation et/ou pour incliner et/ou pour lever un secteur de tour (2a) qui est monté sur la structure de montage (3).

13. Système de construction (10) comprenant au moins deux systèmes de montage (4) selon l'une quelconque des revendications 9 à 12, et au moins deux secteurs de tour (2a) qui comprennent des brides (2b) sur chaque face, un système de montage (4) étant agencé sur chaque bride (2b) des secteurs de tour (2a).

14. Procédé de connexion de secteurs de tour (2a), le procédé comprenant :
- la fourniture d'au moins deux systèmes de réglage (5) selon l'une quelconque des revendications 1 à 8 ;
- la fourniture d'au moins quatre structures de montage (3), dans lequel au moins deux structures de montage (3) sont agencées selon une ligne et sont connectées avec ou sont formées par l'un des systèmes de réglage (5) ;
- la fourniture d'au moins deux secteurs de tour (2a) qui sont munis de brides prédéfinies (2b) qui recouvrent les faces incurvées de la coque de surface du secteur de tour (2a), et la connexion de chaque bride (2b) avec l'une des structures de montage (3) de telle sorte que les secteurs de tour (2a) soient agencés en parallèle l'un à côté de l'autre ou les uns à côté des autres ;
- l'orientation des secteurs de tour (2a) de telle sorte que des bords adjacents soient agencés pour être connectés l'un à l'autre ou les uns aux autres ;
- le réglage de la distance entre les secteurs de tour (2a) à l'aide des systèmes de réglage (5) jusqu'à ce que les côtés des secteurs de tour (2a) se faisant face l'un l'autre ou les uns les autres se rencontrent ; et
- la connexion des secteurs de tour (2a).
